# EUROPEAN PATENT APPLICATION

(11) **EP 4 564 888 A1**
(43) Date of publication of application: **04.06.2025**
(21) Application number: 23851813.8
(22) Date of filing: 08.08.2023
(51) Int. Cl.: H04W 24/02

(54) **COMMUNICATION METHOD AND COMMUNICATION APPARATUS**

(30) Priority: 09.08.2022 CN 202210951764
(71) Applicant: Huawei Technologies Co., Ltd., Shenzhen, Guangdong 518129 (CN)
(72) Inventor: ZENG, Yu, Shenzhen, Guangdong 518129 (CN); GENG, Tingting, Shenzhen, Guangdong 518129 (CN); ZHANG, Hongzhuo, Shenzhen, Guangdong 518129 (CN)
(74) Representative: Gill Jennings & Every LLP
(86) International application number: PCT/CN2023/111694
(87) International publication number: WO 2024/032592

(57) **Abstract**

Embodiments of this application provide a communication method and a communication apparatus. The method includes: sending, by a first network device, first configuration information to a terminal device, where the first configuration information is used by the terminal device in non-connected mode to perform minimization of drive tests MDT measurement on a network on which the first network device is located; receiving, by the first network device, first indication information from the terminal device, where the first indication information indicates that the terminal device has a to-be-reported MDT measurement result, and the first indication information further indicates remaining time for storing the MDT measurement result; and sending, by the first network device, second indication information to the terminal device based on the remaining storage time, where the second indication information indicates the terminal device to report the MDT measurement result. The method provided in embodiments of this application can reduce a risk that the MDT measurement result stored on the terminal device side is deleted due to expiration, thereby improving utilization of measurement resources.

## Description

This application claims priority to Chinese Patent Application No. 202210951764.3, filed with the China National Intellectual Property Administration on August 09, 2022 and entitled "COMMUNICATION METHOD AND COMMUNICATION APPARATUS", which is incorporated herein by reference in its entirety.

### TECHNICAL FIELD

Embodiments of this application relate to the field of communication technologies, and more specifically, to a communication method and a communication apparatus.

### BACKGROUND

A basic idea of a technology of minimization of drive tests (minimization of drive tests, MDT) is that an operator replaces some conventional drive test work with measurement and reporting that are performed by a commercial terminal of a subscriber, to automatically collect measurement data of the terminal, so as to check for and optimize problems and faults in a wireless network. The MDT includes logged MDT (logged MDT) and immediate MDT (immediate MDT). The logged MDT is mainly for measurement performed by user equipment (user equipment, UE) in idle mode or UE in inactive mode. When UE has a logged MDT measurement result locally, the measurement result is stored locally for a maximum of 48 h. The measurement result is automatically deleted upon expiration. If the UE does not report, within the local storage time of 48 h, the measurement result to a base station on a network that delivers an MDT configuration, the network cannot obtain the measurement result of the UE, resulting in a waste of measurement resources.

### SUMMARY

Embodiments of this application provide a communication method and a communication apparatus to reduce a risk that a local MDT measurement result of UE is deleted due to expiration, improving utilization of measurement resources.

According to a first aspect, a communication method is provided. The method includes: sending, by a first network device, first configuration information to a terminal device, where the first configuration information is used by the terminal device in non-connected mode to perform minimization of drive tests MDT measurement on a network on which the first network device is located; receiving, by the first network device, first indication information from the terminal device, where the first indication information indicates that the terminal device has a to-be-reported MDT measurement result, and the first indication information further indicates remaining time for storing the MDT measurement result; and sending, by the first network device, second indication information to the terminal device based on the remaining storage time, where the second indication information indicates the terminal device to report the MDT measurement result.

In this embodiment provided in this application, when indicating to the first network device that the MDT measurement result is locally stored, the terminal device may also indicate, to the first network device, the remaining time for storing the MDT measurement result. Thus, the first network device arranges, based on the remaining storage time, a priority of reporting the MDT measurement result by the terminal device, and obtains an MDT measurement result with less remaining storage time in a timely manner. This reduces a risk that the MDT measurement result is deleted due to expiration, improving utilization of measurement resources.

With reference to the first aspect, in some implementations of the first aspect, the first configuration information includes a first threshold, and the first threshold indicates a time threshold for sending the first indication information to the first network device by the terminal device.

With reference to the first aspect, in some implementations of the first aspect, the first threshold includes any one of the following time values: a value of remaining time for storing the MDT measurement result, a proportion of remaining time for storing the MDT measurement result to maximum storage time, and a maximum value of time during which the terminal device is in non-connected mode.

In this embodiment provided in this application, the first network device may set the time threshold for sending the first indication information by the terminal device, that is, the first threshold, add the first threshold to the first configuration information, and send the first configuration information to the terminal device. In this manner, when the remaining storage time is less than or equal to the first threshold, the terminal device can enter a connected mode, and notify the first network device that the terminal device has the to-be-reported MDT measurement result. This prevents an occurrence of a problem that the MDT measurement result is deleted due to expiration because the terminal device does not enter the connected mode and report the MDT measurement result in a timely manner, or the first network device does not obtain the MDT measurement result in a timely manner.

With reference to the first aspect, in some implementations of the first aspect, the first indication information further indicates a data volume of the MDT measurement result.

In this embodiment provided in this application, when indicating to the first network device that the to-be-reported MDT measurement result is locally stored, the terminal device may also indicate the data volume of the MDT measurement result, that is, a total data volume of the to-be-reported MDT measurement result, to the first network device. Thus, the first network device arranges, based on the data volume of the MDT measurement result, a priority of reporting the MDT measurement result by the terminal device, and preferentially obtains an MDT measurement result with a larger remaining data volume. This releases storage space of the terminal device side, reducing storage energy consumption of the terminal device side; and reduces a waste of resources caused by deletion of the MDT measurement result.

With reference to the first aspect, in some implementations of the first aspect, the sending, by the first network device, second indication information to the terminal device based on the remaining storage time includes: sending, by the first network device, the second indication information to the terminal device based on the remaining storage time and the data volume of the MDT measurement result.

In this embodiment provided in this application, the terminal device may notify the first network device of the remaining time for storing the to-be-reported MDT measurement result and the data volume of the to-be-reported MDT measurement result. Then, the first network device may send the second indication information to the terminal device based on the remaining storage time and the data volume. In other words, the first network device may set a priority for reporting the MDT measurement result by the terminal device, for example, preferentially arrange for a terminal device with less remaining storage time and a larger data volume of an MDT measurement result to report the MDT measurement result. This prevents the MDT measurement result stored on the terminal device from being deleted, and can enable the terminal device with the larger stored data volume to preferentially release storage space, and reduce a waste of resources caused by deletion of the MDT measurement result.

With reference to the first aspect, in some implementations of the first aspect, the first indication information further indicates a cause of radio resource control RRC connection reestablishment.

In this embodiment provided in this application, the first indication information indicates the cause of RRC connection reestablishment, so that the first network device can establish an RRC connection to the terminal device based on the cause of RRC connection reestablishment, and then subsequent reporting of the MDT measurement result is performed.

With reference to the first aspect, in some implementations of the first aspect, the first indication information is included in first RRC connection request information sent by the terminal device to the first network device.

In this embodiment provided in this application, when the terminal device sends the first RRC connection request information to the first network device to request to establish an RRC connection to the first network device, the terminal device may add the first indication information to the first RRC connection request information, to send the first indication information and the first RRC connection request information together. This can reduce signaling overheads.

With reference to the first aspect, in some implementations of the first aspect, the method further includes: receiving, by the first network device, the MDT measurement result from the terminal device.

In this embodiment provided in this application, the terminal device reports the MDT measurement result to the first network device, so that the terminal device can delete the locally stored MDT measurement result to release local storage space.

With reference to the first aspect, in some implementations of the first aspect, the method further includes: receiving, by the first network device from the terminal device, a data volume of a remaining to-be-reported MDT measurement result, and/or remaining time for storing the remaining to-be-reported MDT measurement result.

In this embodiment provided in this application, the data volume of the MDT measurement result stored on the terminal device may be large. The terminal device may report the MDT measurement result round by round; and indicate, to the first network device after an MDT measurement result is reported in a current round or when an MDT measurement result is reported in a current round, the data volume of the to-be-reported MDT measurement result that remains after the current round of MDT measurement result reporting, and/or the remaining time for storing the remaining to-be-reported MDT measurement result. In this way, the network device can preferentially arrange for a terminal device with less remaining storage time and/or a larger data volume of an MDT measurement result to report the MDT measurement result. This prevents the MDT measurement result stored on the terminal device from being deleted; and can enable the terminal device with the larger stored data volume to preferentially release storage space, reducing energy consumption.

According to a second aspect, a communication method is provided. The method includes: receiving, by a terminal device, first configuration information from a first network device, where the first configuration information is used by the terminal device in non-connected mode to perform minimization of drive tests MDT measurement on a network on which the first network device is located; performing, by the terminal device in non-connected mode based on the first configuration information, MDT measurement on the network on which the first network device is located; sending, by the terminal device, first indication information to the first network device, where the first indication information indicates that the terminal device has a to-be-reported MDT measurement result, and the first indication information further indicates remaining time for storing the MDT measurement result; and receiving, by the terminal device, second indication information from the first network device, where the second indication information indicates the terminal device to report the MDT measurement result, and the second indication information is sent by the first network device based on the remaining storage time.

In this embodiment provided in this application, when indicating to the first network device that the to-be-reported MDT measurement result is locally stored, the terminal device may also indicate, to the first network device, the remaining time for storing the MDT measurement result. Thus, the first network device arranges, based on the remaining storage time, a priority of reporting the MDT measurement result by the terminal device, and obtains an MDT measurement result with less remaining storage time in a timely manner. This prevents a waste of measurement resources caused by expiration of the MDT measurement result.

With reference to the second aspect, in some implementations of the second aspect, the first configuration information includes a first threshold, and the first threshold indicates a time threshold for sending the first indication information to the first network device by the terminal device.

With reference to the second aspect, in some implementations of the second aspect, the first threshold includes any one of the following time values: a value of remaining time for storing the MDT measurement result, a proportion of remaining time for storing the MDT measurement result to maximum storage time, and a maximum value of time during which the terminal device is in non-connected mode.

In this embodiment provided in this application, the first network device may set the time threshold for reporting the MDT measurement result by the terminal device, that is, the first threshold, add the first threshold to the first configuration information, and send the first configuration information to the terminal device. In this manner, when the remaining storage time is less than or equal to the first threshold, the terminal device can enter a connected mode, and notify the first network device that the terminal device has the to-be-reported MDT measurement result. This prevents an occurrence of a problem that the MDT measurement result is deleted due to expiration because the terminal device does not enter the connected mode and report the MDT measurement result in a timely manner, or the first network device does not obtain the MDT measurement result in a timely manner.

With reference to the second aspect, in some implementations of the second aspect, the sending, by the terminal device, first indication information to the first network device includes: when the terminal device determines that the remaining storage time is less than or equal to the first threshold, sending, by the terminal device, the first indication information to the first network device.

In this embodiment provided in this application, the terminal device determines a value relationship between the remaining time for storing the to-be-reported MDT measurement result and the first threshold, and sends the first indication information when the remaining storage time is less than or equal to the first threshold. In this way, the terminal device can send the storage information of the MDT measurement result to the first network device before the MDT measurement result is deleted due to expiration. Further, before the MDT measurement result is deleted due to expiration, the first network device can obtain the MDT measurement result from the terminal device, thereby preventing a waste of measurement resources caused by deletion of the MDT measurement result.

With reference to the second aspect, in some implementations of the second aspect, the first indication information further indicates a data volume of the MDT measurement result.

In this embodiment provided in this application, when indicating to the first network device that the to-be-reported MDT measurement result is locally stored, the terminal device may also indicate the data volume, or a data size, of the MDT measurement result to the first network device. Thus, the first network device arranges, based on the data volume of the MDT measurement result, a priority of reporting the MDT measurement result by the terminal device, and preferentially obtains an MDT measurement result with a larger remaining data volume. This releases storage space of the terminal device side, reducing storage energy consumption of the terminal device side; and reduces a waste of resources caused by deletion of the MDT measurement result.

With reference to the second aspect, in some implementations of the second aspect, the first indication information further indicates a cause of radio resource control RRC connection reestablishment.

In this embodiment provided in this application, the first indication information indicates the cause of RRC connection reestablishment, so that the first network device can establish an RRC connection to the terminal device based on the cause of RRC connection reestablishment, and then subsequent reporting of the MDT measurement result is performed.

With reference to the second aspect, in some implementations of the second aspect, the method further includes: when the terminal device is handed over from a connection to the first network device to a connection to a second network device, sending, by the terminal device, third indication information to the second network device, where the third indication information includes the MDT measurement result and/or the remaining time for storing the MDT measurement result.

In this embodiment provided in this application, when the terminal device is handed over between networks, that is, when the first network device and the second network device belong to the different networks, the terminal device may send the third indication information to a network device connected after the handover, that is, the second network device. In this way, the second network device learns that the unreported MDT measurement result of the network on which the first network device is located exists on the terminal device. Further, after the MDT measurement result stored on the terminal device is deleted due to expiration, the second network device may send MDT configuration information to the terminal device. The terminal device performs MDT measurement on a network on which the second network device is located. This can prevent overwriting or deletion of the MDT measurement result and/or the MDT configuration that are/is stored on the terminal device and that are/is of the network on which the first network device is located.

With reference to the second aspect, in some implementations of the second aspect, the third indication information is included in second RRC connection request information sent by the terminal device to the second network device.

In this embodiment provided in this application, when the terminal device sends the second RRC connection request information to the second network device to request to establish an RRC connection to the second network device, the terminal device may add the third indication information to the second RRC connection request information. This can reduce signaling overheads.

With reference to the second aspect, in some implementations of the second aspect, the sending, by the terminal device, third indication information to the second network device includes: when the second network device sends second configuration information to the terminal device, sending, by the terminal device, the third indication information to the second network device, where the second configuration information is used by the terminal device in non-connected mode to perform MDT measurement on the network on which the second network device is located.

In this embodiment provided in this application, when the second network device sends the second configuration information to the terminal device, the terminal device may alternatively send the third indication information to the second network device, to indicate that the terminal device locally stores the MDT measurement result of the network on which the first network device is located; and the terminal device may not perform, based on the second configuration information, MDT measurement on the network on which the second network device is located. This can prevent overwriting or deletion of the unreported MDT measurement result and/or the MDT configuration that are/is stored on the terminal device.

With reference to the second aspect, in some implementations of the second aspect, the method further includes: sending, by the terminal device, the MDT measurement result to the first network device.

In this embodiment provided in this application, the terminal device reports the MDT measurement result to the first network device, so that the terminal device can delete the locally stored MDT measurement result to release local storage space.

With reference to the second aspect, in some implementations of the second aspect, the method further includes: sending, by the terminal device to the first network device, a data volume of a remaining to-be-reported MDT measurement result, and/or remaining time for storing the remaining to-be-reported MDT measurement result.

In this embodiment provided in this application, the data volume of the MDT measurement result stored on the terminal device may be large. The terminal device may report the MDT measurement result round by round; and indicate, to the first network device when an MDT measurement result is reported in a current round or after an MDT measurement result is reported in a current round, the data volume of the to-be-reported MDT measurement result that remains after the current round of MDT measurement result reporting, and/or the remaining time for storing the remaining to-be-reported MDT measurement result. Thus, the first network device can determine whether to allow the terminal device to continue reporting the MDT measurement result.

With reference to the second aspect, in some implementations of the second aspect, the sending, by the terminal device, the MDT measurement result to the first network device includes: when the terminal device is handed over from the connection to the second network device to the connection to the first network device, and the remaining storage time is greater than 0, sending the MDT measurement result to the first network device.

With reference to the second aspect, in some implementations of the second aspect, the sending, by the terminal device to the first network device, a data volume of a remaining to-be-reported MDT measurement result, and/or remaining time for storing the remaining to-be-reported MDT measurement result includes: when the terminal device is handed over from the connection to the second network device to the connection to the first network device, and the remaining storage time is greater than 0, sending, to the first network device, the data volume of the remaining to-be-reported MDT measurement result, and/or the remaining time for storing the remaining to-be-reported MDT measurement result.

In this embodiment provided in this application, after the terminal device is handed over from the network on which the first network device is located to the network on which the second network device is located, the terminal device may be handed over, before expiration of the MDT measurement result of the network on which the first network device is located, from the network on which the second network device is located back to the network on which the first network device is located. In other words, the terminal device stays, only for a short time, on the network on which the second network device is located. In this case, the terminal device can still report the stored MDT measurement result to the first network device, improving utilization of measurement resources. Likewise, the terminal device may report the data volume and the remaining storage time of the remaining to-be-reported MDT measurement result synchronously when reporting the MDT measurement result to the first network device in the current round; or report the data volume and the remaining storage time of the remaining to-be-reported MDT measurement result after reporting the MDT measurement result in the current round.

According to a third aspect, a communication method is provided. The method includes: receiving, by a second network device, third indication information from a terminal device, where the third indication information includes a result of MDT measurement that is performed by the terminal device and that is performed on a network on which a first network device is located, and/or remaining time for storing the MDT measurement result; and sending, by the second network device, second configuration information to the terminal device when the remaining storage time becomes 0, where the second configuration information is used by the terminal device to perform MDT measurement on a network on which the second network device is located.

In this embodiment provided in this application, if the terminal device is handed over from the network on which the first network device is located to the network on which the second network device is located, the second network device sends the second configuration information to the terminal device after the MDT measurement result stored on the terminal device side expires. This can prevent the MDT measurement result stored on the terminal device from being overwritten by a new MDT configuration, thereby preventing a waste of measurement resources.

With reference to the third aspect, in some implementations of the third aspect, the third indication information is included in second RRC connection request information.

In this embodiment provided in this application, when the terminal device sends the second RRC connection request information to the second network device to request to establish an RRC connection to the second network device, the terminal device may add the third indication information to the second RRC connection request information. This can reduce signaling overheads.

According to a fourth aspect, a communication apparatus is provided and used in a first network device. The apparatus includes: a sending unit, configured to send first configuration information to a terminal device, where the first configuration information is used by the terminal device in non-connected mode to perform minimization of drive tests MDT measurement on a network on which the first network device is located; and a receiving unit, configured to receive first indication information from the terminal device, where the first indication information indicates that the terminal device has a to-be-reported MDT measurement result, and the first indication information further indicates remaining time for storing the MDT measurement result. The sending unit is further configured to send second indication information to the terminal device based on the remaining storage time, where the second indication information indicates the terminal device to report the MDT measurement result.

With reference to the fourth aspect, in some implementations of the fourth aspect, the first configuration information includes a first threshold, and the first threshold indicates a time threshold for sending the first indication information to the first network device by the terminal device.

With reference to the fourth aspect, in some implementations of the fourth aspect, the first threshold includes any one of the following time values: a value of remaining time for storing the MDT measurement result, a proportion of remaining time for storing the MDT measurement result to maximum storage time, and a maximum value of time during which the terminal device is in non-connected mode.

With reference to the fourth aspect, in some implementations of the fourth aspect, the first indication information further indicates a data volume of the MDT measurement result.

With reference to the fourth aspect, in some implementations of the fourth aspect, the sending unit is specifically configured to send the second indication information to the terminal device based on the remaining storage time and the data volume of the MDT measurement result.

With reference to the fourth aspect, in some implementations of the fourth aspect, the first indication information further indicates a cause of radio resource control RRC connection reestablishment.

With reference to the fourth aspect, in some implementations of the fourth aspect, the first indication information is included in first RRC connection request information sent by the terminal device to the first network device.

With reference to the fourth aspect, in some implementations of the fourth aspect, the receiving unit is further configured to receive the MDT measurement result from the terminal device.

With reference to the fourth aspect, in some implementations of the fourth aspect, the receiving unit is further configured to receive, from the terminal device, a data volume of a remaining to-be-reported MDT measurement result, and/or remaining time for storing the remaining to-be-reported MDT measurement result.

According to a fifth aspect, a communication apparatus is provided and used in a terminal device. The apparatus includes: a receiving unit, configured to receive first configuration information from a first network device, where the first configuration information is used by the terminal device in non-connected mode to perform minimization of drive tests MDT measurement on a network on which the first network device is located; a processing unit, configured to perform, in non-connected mode based on the first configuration information, MDT measurement on the network on which the first network device is located; and a sending unit, configured to send first indication information to the first network device, where the first indication information indicates that the terminal device has a to-be-reported MDT measurement result, and the first indication information further indicates remaining time for storing the MDT measurement result. The receiving unit is further configured to receive second indication information from the first network device, where the second indication information indicates the terminal device to report the MDT measurement result, and the second indication information is sent by the first network device based on the remaining storage time.

With reference to the fifth aspect, in some implementations of the fifth aspect, the first configuration information includes a first threshold, and the first threshold indicates a time threshold for sending the first indication information to the first network device by the terminal device.

With reference to the fifth aspect, in some implementations of the fifth aspect, the first threshold includes any one of the following time values: a value of remaining time for storing the MDT measurement result, a proportion of remaining time for storing the MDT measurement result to maximum storage time, and a maximum value of time during which the terminal device is in non-connected mode.

With reference to the fifth aspect, in some implementations of the fifth aspect, the sending unit is specifically configured to: send the first indication information to the first network device when it is determined that the remaining storage time is less than or equal to the first threshold.

With reference to the fifth aspect, in some implementations of the fifth aspect, the first indication information further indicates a data volume of the MDT measurement result.

With reference to the fifth aspect, in some implementations of the fifth aspect, the first indication information further indicates a cause of radio resource control RRC connection reestablishment.

With reference to the fifth aspect, in some implementations of the fifth aspect, the sending unit is further configured to: when the terminal device is handed over from a connection to the first network device to a connection to a second network device, send third indication information to the second network device, where the third indication information includes the MDT measurement result and/or the remaining time for storing the MDT measurement result.

With reference to the fifth aspect, in some implementations of the fifth aspect, the third indication information is included in second RRC connection request information sent by the terminal device to the second network device.

With reference to the fifth aspect, in some implementations of the fifth aspect, the sending unit is specifically configured to: when the second network device sends second configuration information to the terminal device, send the third indication information to the second network device, where the second configuration information is used by the terminal device in non-connected mode to perform MDT measurement on a network on which the second network device is located.

With reference to the fifth aspect, in some implementations of the fifth aspect, the sending unit is further configured to send the MDT measurement result to the first network device.

With reference to the fifth aspect, in some implementations of the fifth aspect, the sending unit is further configured to send, to the first network device, a data volume of a remaining to-be-reported MDT measurement result, and/or remaining time for storing the remaining to-be-reported MDT measurement result.

With reference to the fifth aspect, in some implementations of the fifth aspect, the sending unit is specifically configured to: when the terminal device is handed over from the connection to the second network device to the connection to the first network device, and the remaining storage time is greater than 0, send the MDT measurement result to the first network device.

According to a sixth aspect, a communication apparatus is provided and used in a second network device. The apparatus includes: a receiving unit, configured to receive third indication information from a terminal device, where the third indication information includes a result of MDT measurement that is performed by the terminal device and that is performed on a network on which a first network device is located, and/or remaining time for storing the MDT measurement result; and a sending unit, configured to: send second configuration information to the terminal device when the remaining storage time becomes 0, where the second configuration information is used by the terminal device to perform MDT measurement on a network on which the second network device is located.

With reference to the sixth aspect, in some implementations of the sixth aspect, the third indication information is included in second RRC connection request information.

According to a seventh aspect, a communication apparatus is provided. The communication apparatus includes at least one processor and a communication interface. The communication interface is configured for information exchange between the communication apparatus and another communication apparatus. When program instructions are executed in the at least one processor, the communication apparatus is enabled to perform the method according to any one of the first aspect or the possible implementations of the first aspect.

With reference to the seventh aspect, in some implementations of the seventh aspect, the communication apparatus may further include a memory. The memory is coupled to the processor. The processor is configured to implement the method described in any one of the first aspect or the possible implementations of the first aspect. For example, the memory is configured to store instructions and data. When executing the instructions stored in the memory, the processor may implement the method described in any one of the first aspect or the possible implementations of the first aspect.

With reference to the seventh aspect, in some implementations of the seventh aspect, the communication interface may be a transceiver, a circuit, a bus, a module, a pin, or another type of communication interface.

With reference to the seventh aspect, in some implementations of the seventh aspect, the communication apparatus may be a first network device, or may be a component (for example, a chip or a circuit) used in a first network device. The another communication apparatus may be a terminal device, or may be a component (for example, a chip or a circuit) used in a terminal device.

According to an eighth aspect, a communication apparatus is provided. The communication apparatus includes at least one processor and a communication interface. The communication interface is configured for information exchange between the communication apparatus and another communication apparatus. When program instructions are executed in the at least one processor, the communication apparatus is enabled to perform the method according to any one of the second aspect or the possible implementations of the second aspect.

With reference to the eighth aspect, in some implementations of the eighth aspect, the communication apparatus may further include a memory. The memory is coupled to the processor. The processor is configured to implement the method described in any one of the second aspect or the possible implementations of the second aspect. For example, the memory is configured to store instructions and data. When executing the instructions stored in the memory, the processor may implement the method described in any one of the second aspect or the possible implementations of the second aspect.

With reference to the eighth aspect, in some implementations of the eighth aspect, the communication interface may be a transceiver, a circuit, a bus, a module, a pin, or another type of communication interface.

With reference to the eighth aspect, in some implementations of the eighth aspect, the communication apparatus may be a terminal device, or may be a component (for example, a chip or a circuit) used in a terminal device. The another communication apparatus may be a first network device, or may be a component (for example, a chip or a circuit) used in a first network device.

According to a ninth aspect, a communication apparatus is provided. The communication apparatus includes at least one processor and a communication interface. The communication interface is configured for information exchange between the communication apparatus and another communication apparatus. When program instructions are executed in the at least one processor, the communication apparatus is enabled to perform the method according to any one of the third aspect or the possible implementations of the third aspect.

With reference to the ninth aspect, in some implementations of the ninth aspect, the communication apparatus may further include a memory. The memory is coupled to the processor. The processor is configured to implement the method described in any one of the third aspect or the possible implementations of the third aspect. For example, the memory is configured to store instructions and data. When executing the instructions stored in the memory, the processor may implement the method described in any one of the third aspect or the possible implementations of the third aspect.

With reference to the ninth aspect, in some implementations of the ninth aspect, the communication interface may be a transceiver, a circuit, a bus, a module, a pin, or another type of communication interface.

With reference to the ninth aspect, in some implementations of the ninth aspect, the communication apparatus may be a second network device, or may be a component (for example, a chip or a circuit) used in a second network device. The another communication apparatus may be a terminal device, or may be a component (for example, a chip or a circuit) used in a terminal device.

According to a tenth aspect, a chip system is provided. The chip system includes at least one processor, configured to: implement the function in any one of the first aspect or the possible implementations of the first aspect, or implement the function in any one of the second aspect or the possible implementations of the second aspect, or the function in any one of the third aspect or the possible implementations of the third aspect, for example, receive, send, or process data and/or information in the foregoing methods. In a possible design, the chip system further includes a memory. The memory is configured to store program instructions and data that are necessary for a wireless terminal device. The chip system may include a chip, or may include a chip and another discrete device.

According to an eleventh aspect, a computer-readable storage medium is provided. The computer-readable storage medium stores a computer program or instructions. When the computer program or the instructions are executed, the method according to any one of the first aspect or the possible implementations of the first aspect is implemented, or the method according to any one of the second aspect or the possible implementations of the second aspect is implemented, or the method according to any one of the third aspect or the possible implementations of the third aspect is implemented.

According to a twelfth aspect, a computer program product is provided. The computer program product includes computer program code. When the computer program code is run on a computer, the computer is enabled to perform the method according to any one of the first aspect or the possible implementations of the first aspect, or perform the method according to any one of the second aspect or the possible implementations of the second aspect, or perform the method according to any one of the third aspect or the possible implementations of the third aspect.

According to a thirteenth aspect, a communication system is provided, including the apparatus according to any one of the fourth aspect or the possible implementations of the fourth aspect, the apparatus according to any one of the fifth aspect or the possible implementations of the fifth aspect, and the apparatus according to any one of the sixth aspect or the possible implementations of the sixth aspect, or including the apparatus according to any one of the seventh aspect or the possible implementations of the seventh aspect, the apparatus according to any one of the eighth aspect or the possible implementations of the eighth aspect, and the apparatus according to any one of the ninth aspect or the possible implementations of the ninth aspect.

### BRIEF DESCRIPTION OF DRAWINGS

FIG. 1 is a diagram of an architecture of a system to which an embodiment of this application is applicable;
FIG. 2 is a diagram of interaction in an MDT measurement result storage method according to an embodiment of this application;
FIG. 3 is a diagram of interaction in an MDT measurement result storage method according to an embodiment of this application;
FIG. 4 is a diagram of interaction in an MDT measurement result storage method according to an embodiment of this application;
FIG. 5 is a diagram of interaction in an MDT measurement result storage method according to an embodiment of this application;
FIG. 6 is a block diagram of a structure of an MDT measurement result storage apparatus according to an embodiment of this application; and
FIG. 7 is a block diagram of a structure of an MDT measurement result storage device according to an embodiment of this application.

### DESCRIPTION OF EMBODIMENTS

The following describes technical solutions in embodiments of this application with reference to accompanying drawings.

The technical solutions in embodiments of this application may be applied to various communication systems, such as a global system for mobile communications (global system for mobile communication, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th Generation, 5G) system, and a future 6th generation (6th Generation, 6G) system.

A terminal device in embodiments of this application may be user equipment, an access terminal, a subscriber unit, a subscriber station, a mobile station, a remote station, a remote terminal, a mobile device, a user terminal, a terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device, another processing device connected to a wireless modem, a vehicle-mounted device, a wearable device, a terminal device on a communication network such as a public land mobile network (public land mobile network, PLMN), a 5G network, or a future 6G network, or the like. This is not limited in embodiments of this application.

A network device in embodiments of this application may be a device configured to communicate with the terminal device. The network device may be a base transceiver station (base transceiver station, BTS) in a global system for mobile communications (global system for mobile communication, GSM) or a code division multiple access (code division multiple access, CDMA) system, or may be a NodeB (NodeB, NB) in a wideband code division multiple access (wideband code division multiple access, WCDMA) system, or may be an evolved NodeB (evolved NodeB, eNB, or eNodeB) in an LTE system, or may be a radio controller in a scenario of a cloud radio access network (cloud radio access network, CRAN). Alternatively, the network device may be a relay station, an access point, a vehicle-mounted device, a wearable device, a network device on a communication network such as a PLMN network, a 5G network, or a future 6G network, or the like. This is not limited in embodiments of this application.

The terms "one", "a/an", and "this" of singular forms used in this specification and the appended claims of this application are also intended to include expressions such as "one or more", unless otherwise specified in the context clearly. It should be further understood that in the following embodiments of this application, "at least one" and "one or more" mean one, two, or more. The term "and/or" is used to describe an association relationship between associated objects, and indicates that three relationships may exist. For example, A and/or B may indicate the following cases: Only A exists, both A and B exist, and only B exists, where A and B may be singular or plural. The character "/" usually indicates an "or" relationship between associated objects.

In this application, "be used to indicate" may include "be used to directly indicate" and "be used to indirectly indicate". When a piece of indication information indicates A, the indication information may directly indicate A or indirectly indicate A, but it does not indicate that the indication information definitely carries A. In embodiments of this application, descriptions such as "when...", "in a case of...", and "if" all mean that a device performs corresponding processing in a specific objective situation, but are not limitations on time. In addition, the device is not required to necessarily perform a determining action during implementation. This does not mean that there is another limitation.

The terms "include", "comprise", "have", and variants thereof all mean "include but are not limited to", unless otherwise specifically emphasized in another manner.

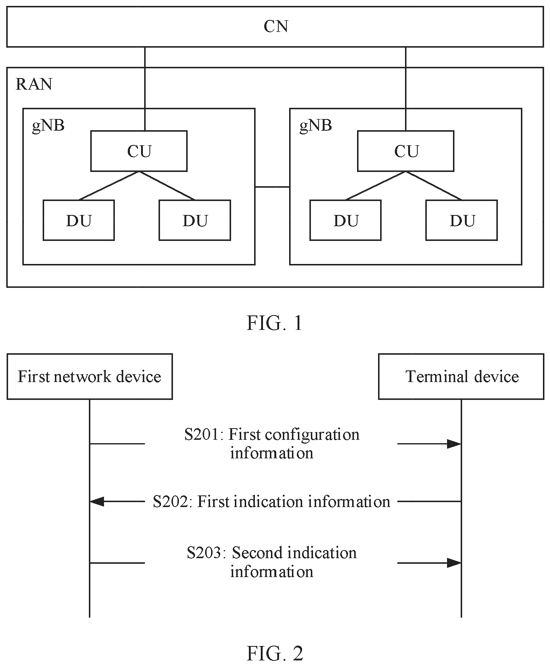

FIG. 1 is a diagram of an architecture of a system to which an embodiment of this application is applicable. As shown in FIG. 1, a radio access network (radio access network, RAN) may be connected to a core network (core network, CN), which may be, for example, an LTE CN or a 5G CN. Correspondingly, a base station may be an eNB in LTE, or may be a next generation NodeB (next generation NodeB, gNB) in 5G. This is not limited in this application. A base station (a gNB is used as an example for description in the figure) may have a split architecture with a central unit (central unit, CU) and a distributed unit (distributed unit, DU). It may be understood that the base station is split into the CU and the DU from a perspective of logical functionality. The CU and the DU may be physically separated, or may be deployed together. A plurality of DUs may share one CU, or one DU may be connected to a plurality of CUs (not shown in the figure). The CU and the DU may be connected through an interface, for example, an F1 interface.

The CU and the DU may be obtained through a split that is based on protocol layers of a wireless network. For example, a possible split manner is that the CU is configured to perform functions of a radio resource control (radio resource control, RRC) layer, a service data adaptation protocol (service data adaptation protocol, SDAP) layer, and a packet data convergence protocol (packet data convergence protocol, PDCP) layer, and the DU is configured to perform functions of a radio link control (radio link control, RLC) layer, a media access control (media access control, MAC) layer, a physical (physical) layer, and the like.

It should be understood that the split of the processing functions between the CU and the DU based on the protocol layers is merely used as an example, and a split may alternatively be performed in another manner. For example, a split may be performed so that the CU or the DU has functions of more protocol layers, or a split may be performed so that the CU or the DU has some processing functions of protocol layers.

Optionally, some functions of the RLC layer and functions of protocol layers above the RLC layer are set on the CU, and remaining functions of the RLC layer and functions of protocol layers below the RLC layer are set on the DU.

Optionally, functions may alternatively be split between the CU and the DU based on service types or other system requirements. For example, a split is performed based on a latency. A function whose processing time needs to satisfy a latency requirement is set on the DU, and a function whose processing time does not need to satisfy the latency requirement is set on the CU.

Optionally, the CU may also have one or more functions of a core network. One or more CUs may be disposed in a centralized manner or a distributed manner. For example, the CUs may be disposed on a network side for ease of centralized management. The DU may have a plurality of radio frequency functions, or the radio frequency functions may be set remotely.

Functions of the CU may be implemented by one entity or different entities. Optionally, the functions of the CU may be further split. For example, a control plane (control plane, CP) and a user plane (user plane, UP) are separated, that is, a control plane of the CU (a CU-CP) and a user plane of the CU (a CU-UP) are separated (not shown in the figure). For example, the CU-CP and the CU-UP may be implemented by different functional entities, and are connected through an E1 interface. The CU-CP and the CU-UP may be coupled to the DU, to jointly perform functions of the base station. The CU-CP, the control plane of the CU, may further include a further split architecture. To be specific, the existing CU-CP is further split into a CU-CP1 and a CU-CP2. The CU-CP1 includes various radio resource management functions, and the CU-CP2 includes only an RRC function and a basic function of CP signaling in the packet data convergence protocol (packet data convergence protocol, PDCP) layer (a PDCP-C function).

In this application, the CU-CP2 may receive an MDT configuration sent by a CN, generate air interface RRC signaling including the MDT configuration, and send the air interface RRC signaling to a terminal device. The terminal device may communicate with one or more CNs through a RAN.

For ease of understanding of this application, the following describes an MDT technology, and types, configurations, and the like of the MDT technology.

An operator usually performs routine network coverage drive tests every month, and also performs some call quality drive tests in a specific area to address user complaints. The MDT may be used to replace all the drive tests in these scenarios. A basic idea of the MDT technology is that an operator replaces some conventional drive test work with measurement and reporting that are performed by a commercial terminal of a subscriber, to automatically collect measurement data of the terminal, so as to check for and optimize problems and faults in a wireless network. The conventional MDT technology may include the following measurement types.
(1) Signal level measurement: UE measures a signal level of a radio signal, and reports a measurement result to a base station or a base station controller.
(2) Quality of service (quality of service, QoS) measurement: A base station usually performs QoS measurement, for example, measurement of service traffic, a service throughput, and a service latency; or UE may perform QoS measurement, for example, uplink processing latency measurement; or a base station and UE may perform joint processing, for example, air interface latency measurement, where the air interface latency is duration from a time at which a measurement data packet passes a service data adaptation protocol (service data adaptation protocol, SDAP) layer or a PDCP layer of the base station to a time at which the data packet arrives at an SDAP layer or a PDCP layer of the UE.
(3) Accessibility measurement: UE records information about an RRC connection establishment failure, and reports the information to a base station or a base station controller.

The MDT includes logged MDT and immediate MDT. The immediate MDT is mainly for measurement performed by UE in RRC connected (RRC_CONNECTED) mode, and the logged MDT is mainly for measurement performed by UE in idle (RRC_IDLE) mode or UE in RRC inactive (RRC_INACTIVE) mode. For example, UE in idle mode or UE in inactive mode performs measurement on a cell that operates at a frequency corresponding to a cell on which the UE currently camps, and an inter-frequency or inter-system neighboring cell that corresponds to cell reselection and that is broadcast in the cell on which the UE currently camps. The immediate MDT is usually used to measure a data volume, an internet protocol (internet protocol, IP) throughput, a packet transmission latency, a packet loss rate, a processing latency, and the like of UE, and the logged MDT is usually used to measure strength of a signal received by UE.

A base station initiates an MDT measurement collection task in two scenarios. One is to initiate signaling based MDT (signaling based MDT), and the other is to initiate management based MDT (management based MDT). The signaling based MDT is MDT for specific UE. The base station receives a message from a core network (core network, CN), indicating to perform MDT by specific UE. The management based MDT is MDT not for specific UE. The base station receives a message from operation, administration and maintenance (operation, administration and maintenance, OAM), indicating to perform MDT. The base station selects, based on a specific policy, UE from UEs served by the base station, to perform MDT measurement. For the signaling based MDT, the CN does not initiate signaling based MDT for UE unless the subscriber has agreed to perform MDT. For management based MDT, when selecting UE, the base station may consider whether the UE agrees to perform MDT. For example, the base station may select only UE that has agreed to perform MDT, to perform MDT measurement. For example, the CN notifies the base station whether UE agrees to perform MDT. Optionally, the CN may alternatively notify the base station of a management based MDT PLMN list. Both the signaling based MDT and the management based MDT may include the logged MDT and the immediate MDT.

For the logged MDT, when UE is in connected mode, a base station sends a logged MDT measurement-related configuration to the UE, for example, notifies the logged MDT-related configuration by using an RRC message. When the UE enters the idle mode or the inactive mode, the UE records a corresponding measurement result based on the corresponding configuration. Then, when the UE initiates an RRC connection to a network, an RRC message carries indication information, indicating that the current UE records the logged MDT measurement result. The network side may send a request for the logged MDT record to the UE. The UE then reports the logged MDT measurement result to the network side. For example, an RRC connection setup complete (RRCSetupComplete) message carries the indication information. Then, the network side requests, by using a UE information request (UEInformationRequest), the UE to transmit the MDT record. For example, the message carries indication information, indicating the UE to upload the MDT record. After that, the UE uploads the MDT record to the network side by using a UE information response (UEInformationResponse). It should be understood that the base station that delivers the logged MDT measurement-related configuration to the UE and a base station to which the UE reports the logged MDT measurement result may not be a same base station.

NPN networks are usually found in scenarios such as a factory zone and an office zone, and have independent core networks. An NPN is dedicated to a private entity such as an enterprise, and may be deployed in a variety of configurations. The NPN may be deployed in one of the following three forms:
(1) a completely independent network;
(2) a network that may be hosted by a PLMN; or
(3) a network that may be used as a slice of a PLMN.

The following two types of NPN may be included.

### (1) Stand-alone non-public network (stand-alone non-public network, SNPN)

Identified by a PLMN identifier (PLMN identifier, PLMN ID) and a network identifier (network identifier, NID) in a system information block (system information block, SIB) 1. For SNPN-capable UE, if the UE operates in SNPN access mode, the UE performs an SNPN selection procedure, and selects and registers with only an SNPN network; if the UE does not operate in SNPN access mode, the UE performs a normal PLMN selection procedure. An SNPN does not support an emergency service.

SNPN mobility: When UE operating in SNPN access mode selects or reselects a cell, the UE can perform selection only within a selected or registered SNPN. To be specific, a PLMN ID and an NID that are broadcast by a cell need to be compared with the selected/registered SNPN, to check whether the PLMN ID and the NID match the selected/registered SNPN. An SNPN-only (SNPN-only) cell may be suitable (suitable) only for subscribers that the cell serves, and is barred (barred) to other subscribers. Manual selection of an SNPN is supported.

### (2) Public network integrated NPN (public network integrated NPN, PNI-NPN)

A closed access group (closed access group, CAG) is introduced to a PNI-NPN and is used to represent a group of subscribers that are allowed to access a CAG cell. A CAG is identified by a CAG ID that is broadcast in SIB1. CAG access may be configured at upper layers: A CAG list consisting of IDs of CAGs that allow for access (allowed CAG list) is configured, and CAG-capable UE is allowed to access these CAGs; and a CAG-only (CAG-only) indication is configured to indicate whether CAG-capable UE is allowed to access a 5G core network only through a CAG cell. A CAG cell supports an emergency service. A PLMN selection procedure is still performed in a PNI-NPN, but CAG selection is added to the PLMN selection procedure.

PNI-NPN mobility: Selection of a CAG cell in cell selection/reselection, but cannot contradict a dedicated cell reselection priority that is stored. A CAG cell broadcasts information about a PLMN, and a CAG ID belonging to an allowed CAG list of UE for that PLMN. The UE checks, based on the allowed CAG list provided by the upper layers, whether a CAG cell is suitable. A CAG-only cell may be suitable only for subscribers that the cell serves, but can only be acceptable (acceptable) for other subscribers. If a CAG-only indication is configured, the UE can select only a CAG cell. Manual selection of a CAG cell is supported. Optionally, a human readable network name (human readable network name, HRNN) is broadcast by using a newly added SIB.

In NR, an access and mobility management function (access and mobility management function, AMF) network element of a core network may deliver an MDT configuration to a gNB through an NG interface. In LTE, a mobility management entity (mobility management entity, MME) of a core network may deliver an MDT configuration to an eNB through an S1 interface. The MDT measurement configurations in the two systems, NR and LTE, are different.

When UE has a logged MDT measurement result locally, the measurement result is stored locally for a maximum of 48 hours. The corresponding measurement result is deleted upon expiration. After the UE enters the connected mode from a non-connected mode, the UE notifies, by using an RRC connection message, a network side that there is the measurement result locally. The network side chooses, based on a specific implementation, whether to request the UE to report the corresponding measurement result.

When the UE locally has an MDT configuration that is being used for measurement, or locally stores an MDT measurement result that has not been reported, but the UE receives a new MDT configuration, the UE uses the new MDT configuration to perform measurement, and deletes the original MDT configuration and measurement result.

Therefore, to resolve a problem that measurement resources may be wasted due to expiration of a logged MDT measurement result, this application provides an MDT measurement result storage method. The following describes, with reference to FIG. 2 to FIG. 5, the MDT measurement result storage method provided in this application.

FIG. 2 is a schematic flowchart of an MDT measurement result storage method according to an embodiment of this application. The method may include steps S201 to S203.

S201: A first network device sends first configuration information to a terminal device, and correspondingly, the terminal device receives the first configuration information sent by the first network device.

The first configuration information is used by the terminal device in non-connected mode to perform MDT measurement on a network on which the first network device is located. The first configuration information may include an MDT configuration. The first configuration information may be notified by a core network to the first network device, and then forwarded by the first network device to the terminal device.

The first network device may be a network device on a public network, or may be a network device on a private network.

In a possible implementation, the first configuration information may include a first threshold, and the first threshold indicates a time threshold for sending first indication information to the first network device by the terminal device.

Optionally, a type of the first threshold may be any one of the following time values: a value of remaining time for storing an MDT measurement result, a proportion of remaining time for storing the MDT measurement result to maximum storage time, and a maximum value of time during which the terminal device is in non-connected mode.

The first threshold is added to the first configuration information, so that before remaining time for storing the MDT measurement result becomes 0, the terminal device can enter a connected mode and report the MDT measurement result to the first network device. This can reduce a risk that the MDT measurement result is deleted due to expiration.

In this embodiment of this application, there may be one or more terminal devices. When there are a plurality of terminal devices, the first network device may send the first configuration information to the plurality of terminal devices separately.

S202: The first network device receives the first indication information from the terminal device, and correspondingly, the terminal device sends the first indication information to the first network device.

The first indication information indicates that the terminal device has the to-be-reported MDT measurement result. The first indication information may further indicate the remaining time for storing the MDT measurement result, or in other words, the remaining time for storing the to-be-reported MDT measurement result stored on the terminal device.

In a possible implementation, the first configuration information sent by the first network device includes the first threshold. In this case, the terminal device sends the first indication information to the first network device when determining that the remaining storage time is less than or equal to the first threshold.

In another possible implementation, before the terminal device determines that the remaining storage time is less than or equal to the first threshold, or when the remaining storage time is greater than the first threshold, the terminal device may also enter the connected mode and send the first indication information to the first network device. For example, when being paged by the first network device, the terminal device enters the connected mode and sends the first indication information to the first network device.

In a possible implementation, the first indication information further indicates a data volume of the MDT measurement result, that is, a total data volume of the to-be-reported MDT measurement result stored on the terminal device.

In a possible implementation, the first indication information further indicates a cause of RRC connection reestablishment. For example, the cause of RRC connection reestablishment may be that the remaining time for storing the MDT measurement result is less than the first threshold.

In a possible implementation, the first indication information may be included in first RRC connection request information sent by the terminal device to the first network device.

S203: The first network device sends second indication information to the terminal device based on the remaining storage time, and correspondingly, the terminal device receives the second indication information from the first network device.

In a possible implementation, the first network device preferentially arranges for, based on remaining storage time, a terminal device with less remaining storage time to report an MDT measurement result.

In another possible implementation, that the first network device sends the second indication information to the terminal device based on the remaining storage time includes: sending, by the first network device, the second indication information to the terminal device based on the remaining time for storing the MDT measurement result and the data volume of the MDT measurement result. For example, the first network device may preferentially arrange for, based on remaining storage time and data volumes of MDT measurement results, a terminal device with less remaining storage time and a larger data volume of an MDT measurement result to report the MDT measurement result.

Preferentially arranging for a terminal device with less remaining storage time to report an MDT measurement result can reduce a risk that the MDT measurement result of the terminal device is deleted due to expiration. Preferentially arranging for a terminal device with a larger data volume of an MDT measurement result to report the MDT measurement result can release storage space of the terminal device, reducing storage pressure of the terminal device.

After the terminal device receives the second indication information from the first network device, the terminal device sends the MDT measurement result to the first network device. Correspondingly, the first network device receives the MDT measurement result from the terminal device.

In a possible implementation, the terminal device may further send, to the first network device, a data volume of a remaining to-be-reported MDT measurement result, and/or remaining time for storing the remaining to-be-reported MDT measurement result. The data volume of the MDT measurement result may be large, and the terminal device may continuously report the MDT measurement result in rounds. After reporting an MDT measurement result in a current round, the terminal device may send, to the first network device, the data volume of the remaining to-be-reported MDT measurement result, and/or the remaining time for storing the remaining to-be-reported MDT measurement result. Thus, the first network device determines, based on the data volume of the remaining to-be-reported MDT measurement result and/or the remaining time for storing the remaining to-be-reported MDT measurement result, whether to allow the terminal device to continue reporting the remaining to-be-reported MDT measurement result.

In another possible implementation, when reporting an MDT measurement result in a current round, the terminal device may alternatively send, to the first network device, the data volume of the remaining to-be-reported MDT measurement result, and/or the remaining time for storing the remaining to-be-reported MDT measurement result.

It should be understood that the first network device in step S201 may not be a same network device as that in steps S202 and S203, or in other words, the first network devices in the foregoing steps may be different network devices on a same network. The different network devices on the same network may exchange information content such as the first configuration information, the first indication information, and the MDT measurement result.

Before the terminal device reports, to the first network device, the MDT measurement result, that is, the MDT measurement result of the network on which the first network device is located, and when the remaining time for storing the MDT measurement result is greater than 0, the terminal device may be handed over between networks due to movement, for example, be handed over to a network of a different operator, or be handed over from a private network to a public network. The terminal device is handed over from a connection to the first network device to a connection to a second network device. The second network device is a network device on a network on which the terminal device is located after the handover. When sending second RRC connection request information to the second network device, the terminal device may add third indication information to the second RRC connection request information, where the third indication information includes the MDT measurement result and/or the remaining time for storing the MDT measurement result. Thus, the second network device learns that the to-be-reported MDT measurement result of the network on which the first network device is located is stored on the terminal device side, and learns the remaining time for storing the MDT measurement result. Then, after the remaining storage time becomes 0, the second network device may send, to the terminal device, second configuration information, which is used by the terminal device to perform MDT measurement on the network on which the second network device is located. This can prevent overwriting of the to-be-reported MDT measurement result that is stored on the terminal device and that is of the network on which the first network device is located.

In another possible implementation, the terminal device may send third indication information to the second network device after establishing an RRC connection to the second network device. For example, when the second network device sends second configuration information to the terminal device, the terminal device sends the third indication information to the second network device. In this implementation, the terminal device may not perform, in non-connected mode based on the second configuration information, MDT measurement on the network on which the second network device is located; and the terminal device may store the MDT measurement result under the first network device until the MDT measurement result expires. After the MDT measurement result expires, the terminal device may again receive the second configuration information sent by the second network device, and perform, in non-connected mode based on the second configuration information, MDT measurement on the network on which the second network device is located.

Before expiration of the MDT measurement result of the network on which the first network device is located, the terminal device may be handed over from the connection to the second network device back to the connection to the first network device due to movement. In this case, the terminal device may send the MDT measurement result to the first network device.

Because a private network, such as an SNPN, is completely isolated from another network, an MDT measurement result of the private network can be reported only in the same private network. According to the MDT measurement result storage method provided in this embodiment of this application, a terminal device may store the MDT measurement result of the private network. If the terminal device is handed over back to the original private network within valid storage time, the original MDT measurement result may be reported to a base station on the private network. This can prevent a waste of measurement resources caused by overwriting or deletion of the MDT measurement result obtained before the handover.

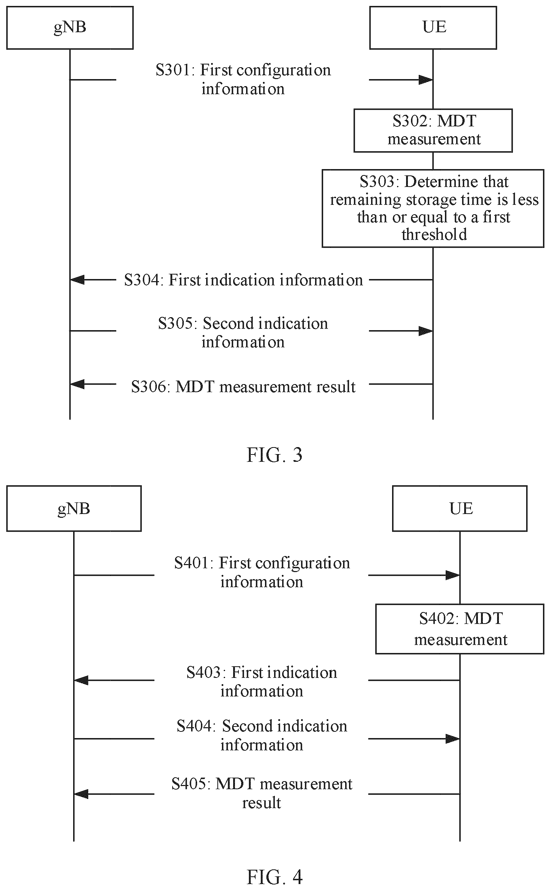

The following describes, with reference to FIG. 3 to FIG. 5, specific implementations of storing an MDT measurement result provided in this application. In a method described in FIG. 3, when delivering an MDT configuration, a gNB may synchronously deliver a time threshold, that is, a first threshold, which indicates UE to enter, before the time threshold is reached, a connected mode in a timely manner to report an MDT measurement result. The method includes steps S301 to S306.

S301: A gNB sends first configuration information to UE, and correspondingly, the UE receives the first configuration information from the gNB.

The gNB may also be referred to as a first network device. For an NR network, the first network device may be a gNB. For an LTE network, the first network device may be an eNB. This is not limited in this application. In this application, only the gNB is used as an example for description.

On the NR network, an AMF network element of a core network may deliver the first configuration information to the gNB through an NG interface. On the LTE, an MME may deliver the first configuration information through an S1 interface. On the NR network and the LTE network, the first configuration information may include different MDT configurations.

When the gNB has a split architecture, that is, the gNB includes a CU and a DU, the CU may be further split into a CU-CP and a CU-UP, and the CU-CP may be further split into a CU-CP1 and a CU-CP2, the CU-CP2 may receive the MDT configuration sent by, for example, the AMF network element of the CN, generate air interface RRC signaling including the MDT configuration or add the first configuration information to the RRC signaling, and send the first configuration information to the UE.

For signaling based MDT, the first configuration information may include the MDT configuration and an IP address of a trace collection entity (trace collection entity, TCE). The MDT configuration may include an MDT activation type, an MDT area scope, an MDT mode and a corresponding configuration parameter thereof, a signaling based MDT PLMN list, and the like. MDT activation types include immediate MDT only (immediate MDT only), logged MDT only (logged MDT only), and immediate MDT and trace (immediate MDT and trace). The immediate MDT only means that a terminal device needs to perform MDT measurement in connected mode after receiving an MDT configuration. The logged MDT only means that a terminal device obtains an MDT configuration in connected mode, performs MDT measurement after entering an idle mode, and reports an MDT measurement result after returning to the connected mode. The immediate MDT and trace means that a terminal device needs to perform MDT measurement immediately and trace measurement.

The first configuration information may include a first threshold. The first threshold indicates a time threshold for sending first indication information to the gNB by the UE, that is, a time threshold for notifying the gNB that a to-be-reported MDT measurement result exists on the UE side. The time threshold may be a latest occasion for sending the first indication information to the gNB by the UE.

Optionally, the remaining storage time threshold may be added by a core network element to the MDT configuration to be delivered, and forwarded by the gNB to the UE; or the remaining storage time threshold may be added by the gNB to the MDT configuration to be delivered.

For example, the AMF network element may deliver the MDT configuration in a trace start (trace start) procedure. In addition, in the delivered MDT configuration, the AMF network element may indicate the gNB to send the MDT configurations of the two types of network, NR and LTE, to the UE. For an SNPN, the gNB may reuse a procedure and signaling in NR to deliver an MDT configuration. In addition, the core network element may add an information element structure of the remaining storage time threshold (time threshold for storing) to the MDT configuration, and the gNB connected to the UE may deliver the MDT configuration to the UE by using logged measurement configuration (LoggedMeasurementConfiguration) signaling in RRC control signaling.

The remaining storage time threshold may be any one of the following time values.
(1) A remaining storage time value, namely, a value of remaining time for the UE to locally store the MDT measurement result. The remaining storage time value may be used to indicate the UE to send the first indication information to the gNB, or enter the connected mode and send the first indication information to the gNB, when remaining time for storing the MDT measurement result is less than or equal to the remaining storage time value.

For example, the remaining storage time value is 30 min, which may be used to indicate the UE to send the first indication information to the gNB when the remaining time for storing the MDT measurement result is less than or equal to 30 min.

In a possible implementation, when the remaining storage time is 30 min, the UE determines that the first indication information needs to be sent to the gNB. However, when the remaining storage time is 30 min, an RRC connection between the UE and the gNB fails. In this case, when the remaining storage time is 29 min, the UE may continue to determine the remaining storage time, resend an RRC connection request to request to enter the connected mode, and send the first indication information to the gNB.

In another possible implementation, before the remaining time for storing the MDT measurement result becomes less than or equal to the remaining storage time value, the UE may also enter the connected mode depending on an actual requirement, and send the first indication information to the gNB. For example, the remaining storage time value is 30 min. When the remaining time for storing the MDT measurement result of the UE is 35 min, the gNB pages the UE. In this case, the UE may also enter the connected mode, and send the first indication information to the gNB.

(2) A proportion of remaining storage time to maximum storage time, namely, a proportion of remaining time for the UE to locally store the MDT measurement result to maximum storage time, or in other words, a proportion of remaining storage time to 48 h. For example, when the remaining storage time proportion is 5%, it may be used to indicate the UE to send the first indication information to the gNB, or enter the connected mode and send the first indication information to the gNB, when the remaining time for storing the MDT measurement result is less than or equal to 2.4 h. For example, when the remaining storage time is 2.4 h, the UE needs to enter the connected mode and send the first indication information to the gNB. If the UE does not enter the connected mode when the remaining storage time is 2.4 h, the UE may continuously perform determining within subsequent time until the UE enters the connected mode and sends the first indication information to the gNB. Similar to the foregoing (1), when the remaining storage time is greater than that obtained based on the proportion, the UE may also choose, depending on an actual requirement, to enter the connected mode, and send the first indication information to the gNB.

(3) A maximum value of time during which the UE is in non-connected mode: After receiving the first configuration information, the UE enters a non-connected mode and performs MDT measurement. For example, when the maximum value of time during which the UE is in non-connected mode is 47 h, it is used to indicate that after entering a non-connected mode and remaining in the mode for a maximum of 47 h, the UE needs to enter the connected mode and send the first indication information to the gNB. Likewise, before the time during which the UE remains in non-connected mode reaches 47 h, the UE may also choose, depending on an actual requirement, to enter the connected mode, and send the first indication information to the gNB.

S302: The UE performs MDT measurement.

After receiving the MDT configuration, the UE enters a non-connected mode, and performs MDT measurement based on the MDT configuration. In addition, the UE may start a T330 timer in a countdown manner. An initial value of the countdown may be consistent with logging duration (logging duration) in the MDT configuration delivered by the gNB. For example, if a value of the logging duration is 30 min, countdown duration of the T330 timer is 30 min, that is, the initial value of the T330 timer is 30 min. After the T330 timer expires, that is, after MDT measurement by the UE ends, the UE may store an MDT measurement result for a maximum of 48 h.

S303: The UE determines that the remaining storage time is less than or equal to the first threshold.

The UE determines whether the remaining time for locally storing the MDT measurement result is less than or equal to the first threshold. If the remaining time is less than or equal to the first threshold, the UE enters the connected mode, initiates an RRC connection reestablishment request to a gNB on a network on which the UE currently camps, and sends the first indication information to the gNB, that is, step S304 is performed.

It should be understood that, when the remaining storage time is greater than the first threshold, the UE may also enter the connected mode and send the first indication information to the gNB. For example, the first threshold is 30 min, which indicates the UE to enter the connected mode when the remaining time for storing the MDT measurement result is less than or equal to 30 min. However, when the remaining storage time is 35 min, the UE may also enter the connected mode depending on an actual requirement such as paging by the gNB, and send the first indication information to the gNB.

S304: The UE sends the first indication information to the gNB.

The first indication information may be included in RRC connection reestablishment request information sent by the UE to the gNB, or may be sent by the UE after an RRC connection to the gNB is established. The first indication information indicates that the to-be-reported MDT measurement result exists on the UE.

In a possible implementation, the first indication information includes a cause of RRC connection reestablishment. For example, the reestablishment cause may be that the remaining time for storing the MDT measurement result is less than the first threshold.

Optionally, the reestablishment cause may be included in a reestablishment cause (ReestablishmentCause) structure in RRC connection reestablishment request (RRCReestablishmentRequest) signaling sent by the UE to the gNB.

In a possible implementation, the first indication information may further include the remaining time for storing the MDT measurement result. For example, the first indication information may be used to indicate that remaining time for storing a logged MDT measurement result of an SNPN network on the UE is 30 min.

In a possible implementation, the first indication information may further include a data volume of the MDT measurement result, or in other words, a data volume of the to-be-reported MDT measurement result currently stored on the UE. For example, the first indication information may be used to indicate that a data volume of a logged MDT measurement result that is of an SNPN network and that is stored on the UE is 2000 bits.

When the gNB has the split architecture, the UE may send the first indication information to the DU.

S305: The gNB sends second indication information to the UE.

The second indication information indicates the UE to report the MDT measurement result.

In a possible implementation, the first indication information sent by the UE includes the remaining time for storing the MDT measurement result. The gNB may send the second indication information based on the remaining storage time, or in other words, the gNB may arrange for, based on the remaining storage time, the UE to report the MDT measurement result.

For example, when receiving first indication information from a plurality of UEs, the gNB may set priorities based on remaining time for storing MDT measurement results on the plurality of UEs. For example, the gNB preferentially arranges for UE with less remaining storage time to report the MDT measurement result. This reduces a risk that the MDT measurement result is deleted.

In a possible implementation, the first indication information sent by the UE includes the data volume of the MDT measurement result. The gNB may send the second indication information based on the data volume, or in other words, the gNB may arrange for, based on the data volume, the UE to report the MDT measurement result.

For example, when receiving first indication information from a plurality of UEs, the gNB may set priorities based on data volumes of MDT measurement results on the plurality of UEs. For example, the gNB preferentially arranges for UE with a larger data volume to report the MDT measurement result. This reduces a waste of resources caused by deletion of the MDT measurement result, and reduces storage pressure of the UE.

In a possible implementation, the first indication information sent by the UE includes the remaining time for storing the MDT measurement result and the data volume of the MDT measurement result. Based on the remaining storage time and the data volume of the MDT measurement result, the gNB may send the second indication information, or in other words, arrange for the UE to report the MDT measurement result. The gNB may set a priority based on the remaining storage time and the data volume. For example, the gNB sets specific weights for remaining storage time and a data volume, sets, based on a comprehensive result, priorities of reporting MDT measurement results by a plurality of UEs, and arranges for the UEs to report the MDT measurement results.

When the gNB has the split architecture, the CU-CP2 may send the second indication information to the UE.

S306: The UE reports the MDT measurement result to the gNB.

After the UE receives the second indication information from the gNB, the UE sends the MDT measurement result, that is, a logged MDT measurement result, to the gNB. The MDT measurement result may include a data volume of a remaining to-be-reported MDT measurement result, and/or remaining time for storing the remaining to-be-reported MDT measurement result.

Because the data volume of the MDT measurement result is large, the UE may report the MDT measurement result in rounds. When reporting an MDT measurement result in a current round, the UE may also indicate, to the gNB, the data volume of the to-be-reported MDT measurement result that remains after the current round of reporting, and/or the remaining time for storing the remaining to-be-reported MDT measurement result. Alternatively, after reporting an MDT measurement result in a current round, the UE may indicate, to the gNB, the data volume of the to-be-reported MDT measurement result that remains after the current round of reporting, and/or the remaining time for storing the remaining to-be-reported MDT measurement result. This is not limited in this application.

For example, the MDT measurement result may be included in a logged measurement reporting (LogMeasReport-r16) information element in response information (UEInformationResponse-r16-IEs) sent by the UE to the gNB, indicating that after the current round of MDT measurement result reporting, the data volume of the local to-be-reported MDT measurement result of the UE is 1000 bits, and the remaining time for storing the 1000 bits of the MDT measurement result is 30 min.

When the gNB has the split architecture, the UE may report the MDT measurement result to the DU.

It should be understood that the gNBs in steps S301 to S306 may not be a same gNB, and only need to be gNBs on a same network, for example, gNBs on a same SNPN. The different gNBs on the same network may exchange the foregoing received or sent information content with each other, for example, the MDT configuration, the MDT measurement result, the remaining storage time, and other information.

According to the MDT measurement result reporting method provided in this embodiment of this application, the time threshold for reporting the MDT measurement result by the UE is set, so that before the MDT measurement result on the UE side is deleted, the gNB can learn that the to-be-reported MDT measurement result exists on the UE. Then, the gNB sets the priority based on the remaining storage time and the data volume, and arranges for the UE to report the measurement result. This reduces a risk that the local MDT measurement result of the UE is deleted due to expiration, and prevents a waste of measurement resources.

FIG. 4 shows another MDT measurement result storage method according to an embodiment of this application. A gNB may not provide a threshold of remaining time for storing an MDT measurement result, but arrange for, based on remaining storage time and/or a data volume that are/is of an MDT measurement result and that are/is provided by UE, the UE to perform reporting, so as to reduce energy consumption of the UE side.

S401: A gNB sends first configuration information to UE.

Unlike step S301 described in FIG. 3, the gNB may provide only MDT-related configuration information in the first configuration information for the UE. In other words, the gNB may not provide a first threshold in the first configuration information to limit a time threshold for the UE to enter a connected mode. Instead, the UE itself determines an occasion for entering the connected mode and sending first indication information, so as to reduce energy consumption of the UE. Other content and a sending manner in step S401 are similar to those described in S301, and details are not described herein again.

S402: The UE performs MDT measurement.

Step S402 is similar to step S302, and details are not described herein again.

S403: The UE sends the first indication information to the gNB.

In a possible implementation, the UE enters the connected mode due to paging by the gNB, and sends the first indication information to the gNB.

In another possible implementation, after completing MDT measurement, the UE determines whether remaining time for storing an MDT measurement result is greater than 0. Before deleting the MDT measurement result, the UE enters the connected mode, and sends the first indication information to the gNB.

S404: The gNB sends second indication information to the UE.

Step S404 is similar to step S305, and details are not described herein again.

S405: The UE reports the MDT measurement result to the gNB.

In other words, the UE sends third indication information to the gNB.

Step S405 is similar to step S306, and details are not described herein again.

According to the solution provided in this application, the gNB arranges for, based on the remaining storage time that is of the MDT measurement result and that is reported by the UE, or based on the remaining storage time and a data volume, the UE to report the MDT measurement result. This can reduce a risk that the MDT measurement result on the UE side is deleted due to expiration.

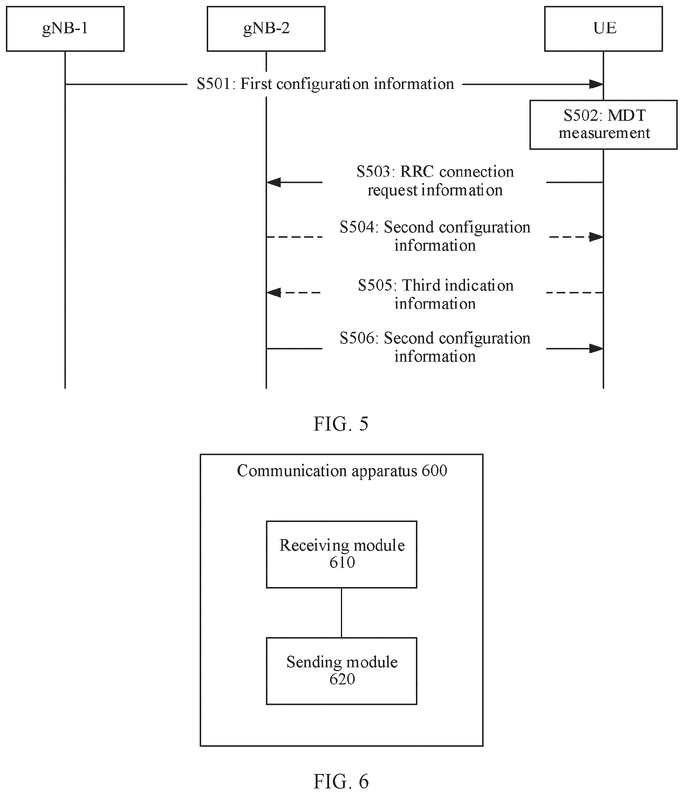

FIG. 5 shows still another MDT measurement result storage method according to an embodiment of this application. When UE is handed over between networks, the UE may retain an MDT measurement result of the network on which the UE is located before the handover, to prevent a waste of resources caused by replacement or deletion of the MDT measurement result of the original network.

S501: A gNB-1 sends first configuration information to UE.

The gNB-1 may also be referred to as a first network device.

A manner for sending the first configuration information, and content of the first configuration information are similar to those described in step S401. To avoid repetition, details are not described herein again.

S502: The UE performs MDT measurement.

Step S502 is similar to step S302, and details are not described herein again.

S503: The UE sends RRC connection request information to a gNB-2.

In a possible implementation, the UE may be handed over, due to movement, to establish a connection to another network. The gNB-1 and the gNB-2 are network devices belonging to different networks. The gNB-2 may also be referred to as a second network device. The gNB-2 may be a network device on an SNPN, or may be a base station on a PNI-NPN or a network device on a PN. This is not limited in this application.

Before the UE reports an MDT measurement result under the gNB-1 to the gNB-1, the UE may be handed over to establish a connection to the gNB-2. For example, step S503 may be performed when the UE is performing MDT measurement, or may be performed after the UE completes MDT measurement. This is not limited in this application. When MDT measurement has not been completed yet, the MDT measurement result of the UE is a current MDT measurement result, or in other words, the MDT measurement result of the UE is an MDT measurement result obtained at a last moment before the handover.

In a possible implementation, the RRC connection request information includes third indication information. The third indication information indicates that the UE stores the MDT measurement result of a network on which the gNB-1 is located. The RRC connection request information may also be referred to as second RRC connection request information.

The third indication information may include the MDT measurement result and/or remaining time for storing the MDT measurement result. Optionally, the third indication information may also include a data volume of the MDT measurement result.

When the gNB-2 has a split architecture, the UE may send the RRC connection request information to a DU.

S504: The gNB-2 sends second configuration information to the UE.

In a possible implementation, when the UE does not add the third indication information to the RRC connection request information, the gNB-2 may send the UE the second configuration information, which is used by the UE to perform MDT measurement on a network on which the gNB-2 is located. A manner in which the gNB-2 sends the second configuration information to the UE is similar to the manner in which the gNB-1 sends the first configuration information to the UE, and details are not described herein again.

When the gNB-2 has the split architecture, a CU-CP2 of the gNB-2 may receive the second configuration information from a CN, generate RRC air interface signaling, and send the second configuration information to the UE.

S505: The UE sends the third indication information to the gNB-2.

In a possible implementation, if the UE does not add the third indication information to the RRC connection request information, and the gNB-2 sends the second configuration information to the UE, the UE may send the third indication information to the gNB-2. The third indication information is the same as the third indication information in step S503, and details are not described herein again.

In a possible implementation, after receiving the second configuration information from the gNB-2, the UE sends the third indication information to the gNB-2, and does not use the second configuration information to perform MDT measurement on the network on which the gNB-2 is located, until the remaining time for storing the MDT measurement result under the gNB-1 becomes 0. This prevents the MDT measurement result under the gNB-1 from being overwritten by a new measurement result.

If the gNB-1 is a network device on a private network, for example, a network device on an SNPN, when the UE is handed over between the networks, the MDT measurement result under the gNB-1 can be reported only to a network device on the same network. After establishing the connection to the gNB-2, the UE retains the MDT measurement result and the MDT configuration under the original gNB-1. This prevents a waste of resources caused by a case that the UE is handed over back to a connection to the gNB-1 within 48 h of time for storing the MDT measurement result, but MDT measurement needs to be performed again because the MDT measurement result has been deleted.

When the gNB-2 has the split architecture, the UE may send the third indication information to the DU of the gNB-2.

S506: The gNB-2 resends the second configuration information to the UE.

In a possible implementation, after the gNB-2 receives the third indication information from the UE, and after the remaining time for storing the MDT measurement result under the gNB-1 becomes 0, the gNB-2 resends the second configuration information to the UE. The manner in which the gNB-2 sends the second configuration information to the UE is similar to the manner in which the gNB-1 sends the first configuration information to the UE, and details are not described herein again.

In a possible implementation, after receiving the third indication information from the UE, the gNB-2 starts a timer according to the remaining time that is for storing the MDT measurement result and that is in the third indication information, to determine remaining time for storing the MDT measurement result that is under the gNB-1 and that is locally stored on the UE.

When the gNB-2 has the split architecture, the CU-CP2 of the gNB-2 may resend the second configuration information to the UE.

In a possible implementation, after receiving the second configuration information, the UE performs, in non-connected mode based on the second configuration information, MDT measurement on the network on which the gNB-2 is located, and performs subsequent reporting. MDT measurement and reporting by the UE under the gNB-2 are similar to the processes of MDT measurement and reporting under the gNB described in FIG. 3 and FIG. 4. To be specific, the gNB-2 and the UE respectively perform the steps performed by the gNB and the UE in steps S302 to S306 or S402 to S405. Details are not described herein again.

In a possible implementation, when the remaining time for storing the MDT measurement result under the gNB-1 is greater than 0, the UE is handed over back to the network on which the gNB-1 is located. In this case, the UE continues performing MDT measurement under the gNB-1 and subsequent reporting, or the UE reports a currently stored MDT measurement result under the gNB-1 to the gNB-1.

For example, when the UE is handed over from the network on which the gNB-1 is located to the network on which the gNB-2 is located, the UE has not yet completed MDT measurement on the network on which the gNB-1 is located, that is, a T330 timer has not expired yet. In this case, if the UE is handed over, before remaining time for storing a currently obtained MDT measurement result elapses, from the network on which the gNB-2 is located back to the network on which the gNB-1 is located, the UE may continue performing MDT measurement until the T330 timer expires.

For another example, when the UE is handed over from the network on which the gNB-1 is located to the network on which the gNB-2 is located, the UE has completed MDT measurement, but has not reported an MDT measurement result to the gNB-1 yet. In this case, if the UE is handed over, before remaining time for storing the MDT measurement result elapses, from the network on which the gNB-2 is located back to the network on which the gNB-1 is located, the UE may send first indication information to the gNB-1 to notify the gNB-1 that the unreported MDT measurement result exists on the UE side, and the gNB-1 arranges for the UE to report the MDT measurement result. In other words, in this case, the UE and the gNB-1 may respectively perform the steps performed by the UE and the gNB in steps S304 to S306 in FIG. 3.

Similar to the methods described in FIG. 2 to FIG. 4, the gNB-1s connected to the UE before and after the handover may not be a same network device, but be different network devices on a same network; and the gNB-2 that delivers the second configuration information to the UE and the gNB-2 that receives the third indication information may also not be a same network device, but be different network devices on a same network.

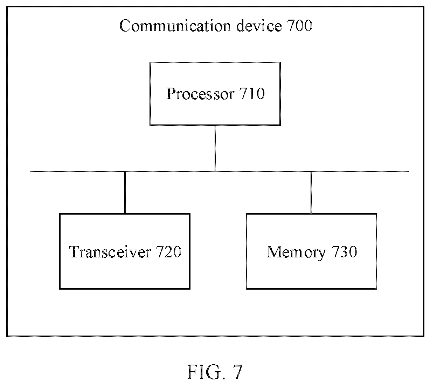

The foregoing describes, with reference to FIG. 2 to FIG. 5, the MDT measurement result storage methods provided in this application. The following describes, with reference to FIG. 6 and FIG. 7, communication apparatuses that can support implementation of the foregoing methods.

FIG. 6 is a block diagram of a structure of a communication apparatus provided based on the method embodiments of this application. The communication apparatus may have the functions of the terminal device, the first network device, or the second network device in the foregoing method embodiments, and be configured to perform the steps performed by the terminal device, the first network device, or the second network device in the foregoing method embodiments.

In a possible implementation, the communication apparatus 600 shown in FIG. 6 may be used as the terminal device used in the foregoing method embodiments, and perform the steps performed by the terminal device in the foregoing method embodiments.

As shown in FIG. 6, the communication apparatus may include a receiving module 610 and a sending module 620.

The receiving module 610 may be configured to support the communication apparatus 600 in receiving information, for example, performing the receiving actions performed by the terminal device in S201, S203, S301, S305, S401, S404, S501, S504, S506, and the like in FIG. 2 to FIG. 5.

The sending module 620 may be configured to support the communication apparatus 600 in sending information, for example, performing the sending actions performed by the terminal device in S202, S304, S306, S403, S405, S503, S505, and the like in FIG. 2 to FIG. 5.

Optionally, the communication apparatus may further include a processing module 630. The processing module 630 is coupled to the sending module 620 and the receiving module 610, and may be configured to support the communication apparatus 600 in performing the processing actions in the foregoing method embodiments, for example, performing the processing actions performed by the terminal device in S302, S303, S402, S502, and the like in FIG. 3 to FIG. 5.

Optionally, the communication apparatus 600 may further include a storage module 640, configured to store program code and data of the communication apparatus 600.

In another possible implementation, the communication apparatus 600 shown in FIG. 6 may be used as the first network device used in the foregoing method embodiments, and perform the steps performed by the first network device in the foregoing method embodiments.

As shown in FIG. 6, the communication apparatus 600 may include a sending module 620 and a receiving module 610.

The receiving module 610 may be configured to support the communication apparatus 600 in receiving information, for example, performing the receiving actions performed by the first network device, the gNB, or the gNB-1 in S202, S304, S306, S403, S405, and the like in FIG. 2 to FIG. 4.

The sending module 620 may be configured to support the communication apparatus 600 in sending information, for example, performing the sending actions performed by the first network device in S201, S203, S301, S305, S401, S404, S501, and the like in FIG. 2 to FIG. 5.

Optionally, the communication apparatus may further include a processing module 630. The processing module 630 is coupled to the sending module 620 and the receiving module 610, and may be configured to support the communication apparatus 600 in performing the processing actions in the foregoing method embodiments.

Optionally, the communication apparatus 600 may further include a storage module 640, configured to store program code and data of the communication apparatus 600.

In another possible implementation, the communication apparatus 600 shown in FIG. 6 may be used as the second network device used in the foregoing method embodiments, and perform the steps performed by the second network device in the foregoing method embodiments.

As shown in FIG. 6, the communication apparatus 600 may include a sending module 620 and a receiving module 610.

The receiving module 610 may be configured to support the communication apparatus 600 in receiving information, for example, performing the receiving actions performed by the second network device or the gNB-2 in S503, S505, and the like in FIG. 5.

The sending module 620 may be configured to support the communication apparatus 600 in sending information, for example, performing the sending actions performed by the second network device in S504, S506, and the like in FIG. 5.

Optionally, the communication apparatus may further include a processing module 630. The processing module 630 is coupled to the sending module 620 and the receiving module 610, and may be configured to support the communication apparatus 600 in performing the processing actions in the foregoing method embodiments.

Optionally, the communication apparatus 600 may further include a storage module 640, configured to store program code and data of the communication apparatus 600.

FIG. 7 is a block diagram of a communication device 700 according to an embodiment of this application. As shown in the figure, the communication device 700 includes at least one processor 710 and a transceiver 720. The processor 710 is coupled to a memory, and is configured to execute instructions stored in the memory, to control the transceiver 720 to send a signal and/or receive a signal.

Optionally, the communication device 700 further includes a memory 730, configured to store instructions.

In some embodiments, the processor 710 and the memory 730 may be integrated into a processing apparatus. The processor 710 is configured to execute program code stored in the memory 730, to implement the foregoing functions. In a specific implementation, the memory 730 may alternatively be integrated into the processor 710, or be independent of the processor 710.

In some embodiments, the transceiver 720 may include a receiver and a transmitter.

The transceiver 720 may further include an antenna. There may be one or more antennas. The transceiver 720 may alternatively be a communication interface or an interface circuit.

When the communication device 700 is a chip, the chip includes a transceiver module and a processing module. The transceiver module may be an input/output circuit or a communication interface. The processing module may be a processor, or a microprocessor, or an integrated circuit integrated on the chip.

When the communication device 700 is a chip used in a terminal device/network device, the chip in the terminal device/network device implements the functions of the terminal device/network device in the foregoing method embodiments. The chip in the terminal device/network device receives information from another module (for example, a radio frequency module or an antenna) in the terminal device/network device, where the information is sent by the network device/terminal device or another device to the terminal device/network device. Alternatively, the chip in the terminal device/network device outputs information to another module (for example, a radio frequency module or an antenna) in the terminal device/network device, where the information is sent by the terminal device/network device to the network device/terminal device or another device.

An embodiment of this application further provides a computer-readable storage medium. The computer-readable storage medium stores a computer program or instructions, and the computer program or the instructions are executed by a computer (for example, a processor), to implement some or all of the steps in any method performed by any apparatus in embodiments of this application.

An embodiment of this application further provides a computer program product including instructions. When the computer program product runs on a computer, some or all of the steps in any method performed by any apparatus in embodiments of this application are performed.

A person of ordinary skill in the art may be aware that, in combination with the examples described in embodiments disclosed in this specification, modules and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a specific working process of the system, apparatus, and module described above, reference may be made to a corresponding process in the foregoing method embodiments, and details are not described herein again.

In the several embodiments provided in this application, it should be understood that the disclosed system, apparatus, and method may be implemented in other manners. For example, the apparatus embodiments described above are merely examples. For example, the module division is merely logical function division and may be other division during actual implementation. For example, a plurality of modules or components may be combined or integrated into another system, or some features may be ignored or not be performed. In addition, the displayed or discussed mutual couplings, or direct couplings, or communication connections may be implemented by using some interfaces. The indirect couplings or communication connections between the apparatuses or modules may be implemented in electronic, mechanical, or other forms.

The modules described as separate parts may or may not be physically separate, and parts displayed as modules may or may not be physical modules, may be located in one position, or may be distributed on a plurality of network modules. Some or all of the modules may be selected depending on actual needs to achieve the objectives of the solutions in embodiments.

In addition, the functional modules in embodiments of this application may be integrated into one processing module, or each of the modules may exist alone physically, or two or more modules may be integrated into one module.

When the functions are implemented in a form of a software functional module and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps in the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
sending, by a first network device, first configuration information to a terminal device, wherein the first configuration information is used by the terminal device in non-connected mode to perform minimization of drive tests MDT measurement on a network on which the first network device is located;
receiving, by the first network device, first indication information from the terminal device, wherein the first indication information indicates that the terminal device has a to-be-reported MDT measurement result, and the first indication information further indicates remaining time for storing the MDT measurement result; and
sending, by the first network device, second indication information to the terminal device based on the remaining storage time, wherein the second indication information indicates the terminal device to report the MDT measurement result.

2. The method according to claim 1, wherein the first configuration information comprises a first threshold, and the first threshold indicates a time threshold for sending the first indication information to the first network device by the terminal device.

3. The method according to claim 2, wherein the first threshold comprises any one of the following time values:
a value of remaining time for storing the MDT measurement result;
a proportion of remaining time for storing the MDT measurement result to maximum storage time; and
a maximum value of time during which the terminal device is in non-connected mode.

4. The method according to any one of claims 1 to 3, wherein the first indication information further indicates a data volume of the MDT measurement result.

5. The method according to claim 4, wherein the sending, by the first network device, second indication information to the terminal device based on the remaining storage time comprises:
sending, by the first network device, the second indication information to the terminal device based on the remaining storage time and the data volume of the MDT measurement result.

6. The method according to any one of claims 1 to 5, wherein the first indication information further indicates a cause of radio resource control RRC connection reestablishment.

7. The method according to any one of claims 1 to 6, wherein the first indication information is comprised in first RRC connection request information sent by the terminal device to the first network device.

8. The method according to any one of claims 1 to 7, wherein the method further comprises: receiving, by the first network device, the MDT measurement result from the terminal device.

9. The method according to claim 8, wherein the method further comprises: receiving, by the first network device from the terminal device, a data volume of a remaining to-be-reported MDT measurement result, and/or remaining time for storing the remaining to-be-reported MDT measurement result.

10. A communication method, wherein the method comprises:
receiving, by a terminal device, first configuration information from a first network device, wherein the first configuration information is used by the terminal device in non-connected mode to perform minimization of drive tests MDT measurement on a network on which the first network device is located;
performing, by the terminal device in non-connected mode based on the first configuration information, MDT measurement on the network on which the first network device is located;
sending, by the terminal device, first indication information to the first network device, wherein the first indication information indicates that the terminal device has a to-be-reported MDT measurement result, and the first indication information further indicates remaining time for storing the MDT measurement result; and
receiving, by the terminal device, second indication information from the first network device, wherein the second indication information indicates the terminal device to report the MDT measurement result, and the second indication information is sent by the first network device based on the remaining storage time.

11. The method according to claim 10, wherein the first configuration information comprises a first threshold, and the first threshold indicates a time threshold for sending the first indication information to the first network device by the terminal device.

12. The method according to claim 11, wherein the first threshold comprises any one of the following time values:
a value of remaining time for storing the MDT measurement result;
a proportion of remaining time for storing the MDT measurement result to maximum storage time; and
a maximum value of time during which the terminal device is in non-connected mode.

13. The method according to claim 11 or 12, wherein the sending, by the terminal device, first indication information to the first network device comprises:
when the terminal device determines that the remaining storage time is less than or equal to the first threshold, sending the first indication information to the first network device.

14. The method according to any one of claims 10 to 13, wherein the first indication information further indicates a data volume of the MDT measurement result.

15. The method according to any one of claims 10 to 14, wherein the first indication information further indicates a cause of radio resource control RRC connection reestablishment.

16. The method according to any one of claims 10 to 15, wherein the method further comprises:
when the terminal device is handed over from a connection to the first network device to a connection to a second network device, sending, by the terminal device, third indication information to the second network device, wherein the third indication information comprises the MDT measurement result and/or the remaining time for storing the MDT measurement result.

17. The method according to claim 16, wherein the third indication information is comprised in second RRC connection request information sent by the terminal device to the second network device.

18. The method according to claim 16, wherein the sending, by the terminal device, third indication information to the second network device comprises:
when the second network device sends second configuration information to the terminal device, sending, by the terminal device, the third indication information to the second network device, wherein the second configuration information is used by the terminal device in non-connected mode to perform MDT measurement on a network on which the second network device is located.

19. The method according to any one of claims 10 to 18, wherein the method further comprises:
sending, by the terminal device, the MDT measurement result to the first network device.

20. The method according to claim 19, wherein the method further comprises: sending, by the terminal device to the first network device, a data volume of a remaining to-be-reported MDT measurement result, and/or remaining time for storing the remaining to-be-reported MDT measurement result.

21. The method according to claim 19 or 20, wherein the sending, by the terminal device, the MDT measurement result to the first network device comprises:
when the terminal device is handed over from the connection to the second network device to the connection to the first network device, and the remaining storage time is greater than 0, sending the MDT measurement result to the first network device.

22. A communication apparatus, comprising a module or a unit configured to perform the method according to any one of claims 1 to 9, or comprising a module or a unit configured to perform the method according to any one of claims 10 to 21.

23. A communication apparatus, comprising a processor, configured to: invoke a computer program from a memory and run the computer program, so that the apparatus performs the method according to any one of claims 1 to 9, or performs the method according to any one of claims 10 to 21.

24. The apparatus according to claim 23, wherein the apparatus further comprises the memory and/or a communication interface, the memory is configured to store the computer program, and the communication interface is configured to send and receive data/signaling.

25. A computer-readable medium, wherein the computer-readable medium stores program code, and when the program code is run on a computer, the computer is enabled to perform the method according to any one of claims 1 to 9 or the method according to any one of claims 10 to 21.

26. A chip system, wherein the chip system comprises at least one processor, and when program instructions are executed in the at least one processor, the method according to any one of claims 1 to 9 or the method according to any one of claims 10 to 21 is implemented.
